# EUROPEAN PATENT APPLICATION

(11) **EP 2 046 039 A2**
(43) Date of publication of application: **08.04.2009**
(21) Application number: 08159109.1
(22) Date of filing: 26.06.2008
(51) Int. Cl.: H04N 7/173, H04N 5/00

(54) **Information processing apparatus, information processing system, and controlling method of information processing apparatus**

(30) Priority: 27.06.2007 JP 2007169566
(71) Applicant: Fujitsu Limited, Kawasaki-shi, Kanagawa 211-8588 (JP)
(72) Inventor: Matsukura, Ryuichi, Kanagawa 211-8588 (JP); Honda, Fumio, Kanagawa 211-8588 (JP); Iwamatsu, Noboru, Kanagawa 211-8588 (JP); Ohno, Takashi, Kanagawa 211-8588 (JP); Matsuda, Masahiro, Kanagawa 211-8588 (JP); Gotoh, Tomonori, Kanagawa 211-8588 (JP); Arimura, Yosuke, Kanagawa 211-8588 (JP)
(74) Representative: Stebbing, Timothy Charles

(57) **Abstract**

There is provided an information processing apparatus in which a great number of users can use thin clients, and in which various services such as simultaneous picture distribution are realized in an integrated manner, an information processing system, and a controlling method of the information processing apparatus. The apparatus capable of executing plural Operating Systems (OS) includes image transmitting devices having: a Graphics Processing Unit (GPU) for receiving a drawing instruction signal of a screen output from the OS and generating an image signal of a display screen; and a communicator for transmitting the image signal of the display screen to a terminal that operates as a thin client. The devices compresse the image signal to a digital motion picture by a coding unit as necessary. Then, the devices transmit the coded signal from the communicator. The apparatus dynamically assigns the devices to the OSs corresponding to the respective terminals via Virtual Machine Monitor (VMM).

## Description

The present invention relates to information processing apparatuses capable of providing processes by a computer to a plurality of users through a thin client architecture, in particular, to an information processing apparatus enabling a great number of users to use a thin client while suppressing increase in processing load and transmission load by transmitting a computer screen as a motion picture using a hardware accelerator assigned to each user, an information processing system, and a controlling method of the information processing apparatus.

In recent years, the broadband communication infrastructure is becoming widespread, and as also known as an ubiquitous society, the user can receive various services anytime and anywhere through a communication network using a terminal device which he/she carries.

If the terminal device which the user carries provides higher functions in order to connect to various services, the cost of the respective terminal devices rises. If a large-capacity storage device is provided in such a terminal device, the risk of leakage of various information including stored personal information, confidential information of a company and the like becomes higher when the terminal device gets stolen, lost etc.

Thus, in recent years, a thin client architecture is widely used. In the thin client architecture, the terminal device of the user provides minimum hardware including memory, network card and graphic card for the processing. The actual main process is carried out in another information processing apparatus connected by way of the communication network, and the terminal device receives only the display screen images as a motion picture based on the result of process from the another information processing apparatus, and displays them on the display. The cost then can be suppressed with the hardware to be arranged in the terminal device made to a minimum, and leakage of information can be prevented because no data is held on the terminal device.

A plurality of methods has been proposed for the method of transmitting the display screen images from another information processing apparatus in the thin client architecture.

A first method includes transmitting or receiving a drawing command of the Graphic User Interface (GUI) based on the result of the process as the display screen images, and having the terminal device draw the GUI on the display based on the drawing command received from another information processing apparatus to reproduce the result of processing, so that a minimum amount of processing is carried out in the terminal device.

A second method includes a method of compression coding the display screen output as a result of processing in another information processing apparatus to form a motion picture or video, and transmitting the motion picture to the terminal device as information of the display screen thereby realizing the processing in another information processing apparatus from a remote place (e.g., Japanese Laid-Open Patent Publication No. 2007-104692).

There is provided, according to an aspect of the invention, an information processing apparatus including one or a plurality of executing means for executing various processes, and outputting drawing instruction signals of a screen according to the executed process, wherein the information processing apparatus includes one or a plurality of image transmitting means which has an image signal generating unit for generating image signals representing the screen based on the drawing instruction signals when the drawing instruction signals are provided, and a transmitting unit for transmitting the generated image signals to the outside.

Another aspect provides an information processing system including an information processing apparatus including one or a plurality of executing means for executing various processes, and outputting drawing instruction signals of a screen according to the executed process, and one or a plurality of terminal devices including display means for displaying the screen, wherein the information processing apparatus includes one or a plurality of image transmitting means which has a screen generating unit for generating image signals representing the screen based on the drawing instruction signals when the drawing instruction signals are provided, and a transmitting unit for transmitting the generated image signals; the image signal is transmitted to the corresponding one or a plurality of terminal devices by providing the drawing instruction signal to the screen generating unit of the image transmitting means; the terminal device includes means for receiving the image signal transmitted from the transmitting means and displays a display screen based on the received image signal.

A further aspect of the invention is a controlling method of an information processing apparatus for operating one or a plurality of executing means for executing various processes, and outputting drawing instruction signals of a screen according to the executed process. The controlling method includes the steps of: using one or a plurality of image transmitting means including a screen generating unit for generating image signals representing the screen based on the drawing instruction signals when the drawing instruction signals are provided, and a transmitting unit for transmitting the generated image signals to the outside, assigning the image transmitting means to the respective executing means, providing the drawing instruction signals output from the respective executing means to the screen generating unit of each image transmitting means, and transmitting the image signals generated based on the provided drawing instruction signals to one or a plurality of destinations.

According to the above aspects, when transmitting an image signal representing the display screen to an external device, one or a plurality of image transmitting means respectively performs the transmission process, whereby its processing load is reduced, and the image signals of a plurality of display screens can be transmitted to the external device (terminal device). A great number of users are able to use thin clients by applying such an information processing apparatus to a thin client server.

Reference is made, by way of example only, to the accompanying drawings in which:
FIG. 1 is an explanatory view showing an outline of a configuration of a thin client architecture according to a first embodiment;
FIG. 2 is a block diagram showing an internal configuration of an information processing apparatus and a terminal device according to the first embodiment;
FIG. 3 is an explanatory view showing an outline of process performed between the information processing apparatus and the terminal device according to the first embodiment;
FIGS. 4A to 4C are explanatory views showing content example of a management table and an available table of an image transmitting device stored in a storage unit of the information processing apparatus according to the first embodiment;
FIG. 5 is an operation flow showing one example of a processing procedure in which activation of an OS is requested from the terminal device to the information processing apparatus according to the first embodiment;
FIG. 6 is an operation flow showing one example of a processing procedure of when the CPU of the information processing apparatus according to the first embodiment accepts an activation request signal from one terminal device;
FIG. 7 is an operation flow showing one example of a processing procedure in which stop of the OS is requested to the information processing apparatus from the terminal device in the first embodiment;
FIG. 8 is an operation flow showing one example of a processing procedure of when the CPU of the information processing apparatus according to the first embodiment accepts a stop request signal from one terminal device;
FIG. 9 is an operation flow showing one example of a processing procedure corresponding to the operation state of the OS corresponding to one terminal device by the CPU of the information processing apparatus according to the first embodiment;
FIG. 10 is an operation flow showing one example of a processing procedure corresponding to the operation state of the OS corresponding to one terminal device by the CPU of the information processing apparatus according to the first embodiment;
FIG. 11 is an operation flow showing one example of a processing procedure corresponding to the operation state corresponding to one terminal device by the CPU of the information processing apparatus according to the first embodiment;
FIG. 12 is an operation flow showing one example of a processing procedure in which the transmission stop signal is transmitted from the terminal device to the information processing apparatus according to the first embodiment;
FIG. 13 is an operation flow showing one example of a processing procedure of when the CPU of the information processing apparatus according to the first embodiment accepts a transmission stop signal from one terminal device;
FIG. 14 is an operation flow showing one example of a processing procedure of when the CPU of the information processing apparatus according to the first embodiment accepts a transmission start signal from one terminal device;
FIG. 15 is a block diagram showing an inner configuration of an information processing apparatus and a terminal device according to a second embodiment; and
FIG. 16 is a block diagram showing an inner configuration of an image transmitting device arranged in the information processing apparatus according to the second embodiment.

A plurality of methods has been proposed for transmitting display screen images from another information processing apparatus (server) to thin clients, in the thin client architecture.

A first method includes transmitting or receiving a drawing command of the Graphic User Interface (GUI) based on the result of processing as the display screen images, and having the terminal device draw the GUI on the display based on the drawing command received from another information processing apparatus to reproduce the results of processing, so that minimum processing is carried out in the terminal device.

A second method includes a method of compression coding the display screen output as a result of processing carried out in another information processing apparatus to a motion picture, and transmitting the motion picture to the terminal device as information of the display screen thereby realizing the process in another information processing apparatus from a remote place (e.g., Japanese Laid-Open Patent Publication No. 2007-104692).

In the first method realized by transmitting the drawing command, the terminal device needs to appropriately correspond to the latest drawing commands so that the terminal device can draw according to the drawing command output from another information processing apparatus that performs the actual process. In other words, the terminal device needs to stay compliant (be updated) every time the processing related to the drawing command in another information processing apparatus is modified due to version up etc.

The second method of transferring the display screen as a motion picture is considered to be desirable, but a service that satisfies the user could not be provided up to now due to limitation on the transmission speed of the communication network. A communication network enabling transmission and reception of high resolution pictures is being realized in recent years. However, in the case of the second method, it is difficult to connect the numerous picture coding devices to each of numerous terminal in a one on one correspondence. On the other hand, increase in load becomes a problem when transmitting respective compression coded motion pictures to multiple external devices while simultaneously compression coding a plurality of different image signals in one device.

Embodiments will be specifically described below based on the drawings.

### <First embodiment>

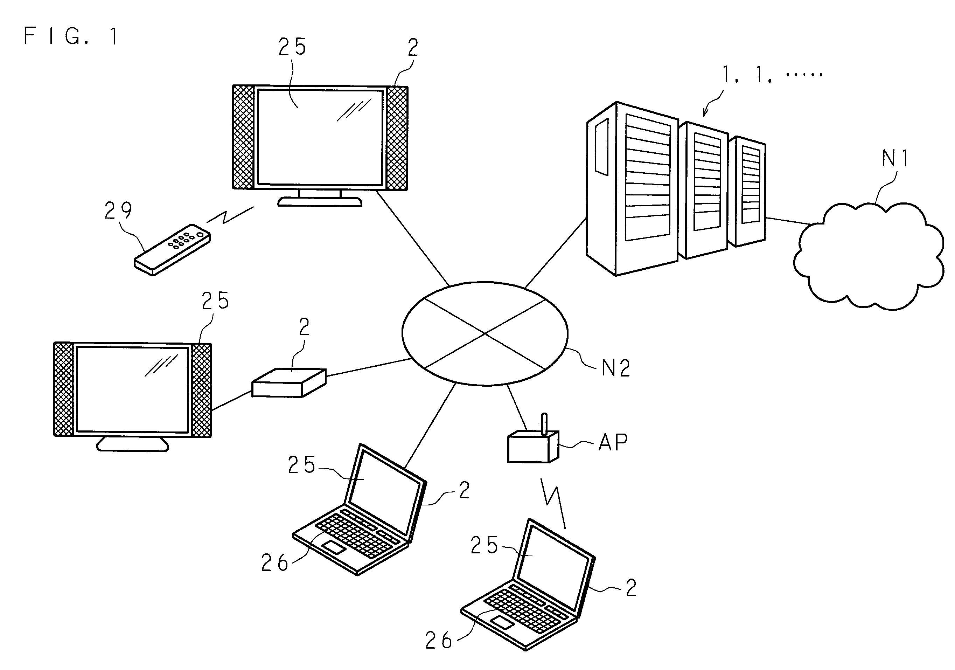

FIG. 1 is an explanatory view showing an outline of a configuration of a thin client architecture according to a first embodiment. The thin client architecture is configured including information processing apparatus groups 1, 1, ... according to the present invention, and terminal devices 2, 2, ... connected through a network N2. The information processing apparatus groups 1, 1, ... are also connected to a public communication network N1 such as Internet. The network N2 is desirably a dedicated Internet Protocol (IP) communication network capable of transmitting and receiving high resolution pictures. The information processing apparatus groups 1, 1, ... are respectively configured by a server computer device. The terminal devices 2, 2, ... are used as a thin client, and are respectively configured by a personal computer device not including a storage device such as HD, but may be a television receiver having the configuration described below or a Set Top Box (STB) to be connected to the television receiver. The relationship between the information processing apparatus 1 and the terminal devices 2, 2, ..., will be described below as one-many relation to simplify the description.

The information processing apparatus 1 is virtualized, i.e. applied with a virtual technology of operating as a plurality of information processing apparatuses in one device, and the information processing apparatus activates and executes an OS corresponding to each terminal device 2, 2, .... In the information processing apparatus 1, a server management unit having a function of activating/stopping each OS and managing the operation thereof is activated and executed. The terminal device 2 is connected to the server management unit to transmit a signal requesting for activation of the OS corresponding to itself. The information processing apparatus 1 activates the corresponding OS, but in this case, a thin client architecture is realized by a picture transfer method of transmitting an image signal representing the display screen to the terminal device 2 to display a screen on a display 25 of the terminal device 2 based on a drawing instruction output by the relevant OS. The information processing apparatus 1 acquires an address of the terminal device 2 corresponding to the activated OS, includes the image signal representing the display image generated based on the drawing instruction signal generated by the OS in an IP packet with the acquired address as the destination, and transmits the same to the network N2. The terminal device 2 receives the transmitted image signal, displays the same on the display 25, and starts the operation as the thin client.

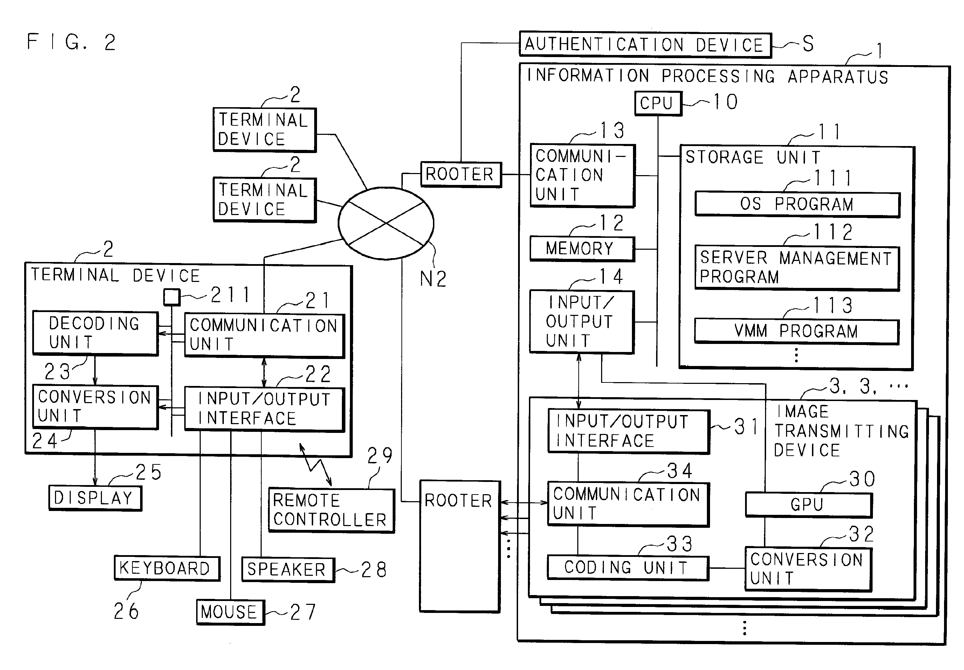

FIG. 2 is a block diagram showing an internal configuration of the information processing apparatus 1 and the terminal devices 2, 2, ... according to the first embodiment. The information processing apparatus 1 is configured by a server computer device, and is connected to the network N2 by way of a router. As shown in FIG. 2, an authentication device S for authenticating the connection from each terminal device 2, 2, ... to the information processing apparatus 1 may be connected. The public communication network N1 is also connected (not shown) as shown in FIG. 1. The information processing apparatus 1 includes a CPU 10 for controlling each configuring unit, a storage unit 11 such as hard disc, a memory 12 such as Dynamic Random Access Memory (DRAM), a communication unit 13 such as network card, an input/output unit 14 including a serial transfer bus slot such as Peripheral Component Interconnect (PCI), and a plurality of image transmitting devices 3, 3, ... for transmitting the image signal of the display screen.

The CPU 10 operates by reading out an OS program 111 and a server management program 112 stored in the storage unit 11 as hereinafter described to the memory 12, and the executing the same. In this case, the CPU 10 also reads out a Virtual Machine Monitor (VMM) program 113 stored in the storage unit 11 and executes the same to provide a virtual environment in which the information processing apparatus 1 logically operates as a plurality of information processing apparatuses. The information processing apparatus 1 thus can logically enable a plurality of independent OS to operate. The CPU 10 is configured by a multi-core CPU, and is suitably designed so that each OS 101, server management unit 102, and VMM 103 dispersedly operate on physically different CPU cores. The CPU 10 is not limited to a multi-core CPU and may be a single core CPU.

In addition to various data, the storage unit 11 stores the OS program 111, the server management program 112, and the VMM program 113 to be read out and executed by the CPU 10. The storage unit 11 also stores setting information etc. of the corresponding terminal devices 2, 2, ... when the CPU 10 operates as each OS 101, 101, .... When the CPU 10 operates as each OS 101, 101, ..., if the operation state transitions to a suspended state such as pause/standby etc. or shutdown, it is used as a placed to store the image of the memory 12 for every OS 101, 101, ....

The OS program 111 is OS software of Windows (registered trademark) having Command User Interface (CUI), Graphic User Interface (GUI), Linux, or the like. The CPU 10 reads out the OS program 111 and operates as the OS 101, so that a drawing instruction signal for drawing the display screen including the CUI, GUI, or the like displayed according to various processes is generated and output. When the CPU 10 operates as the OS 101, input signal from an input/output device such as a keyboard, a mouse, or the like is accepted, various processes are executed according to the input signal, and not only the drawing instruction signal for configuring the screen of the CUI and GUI according to the process, but a voice signal etc. is also output.

The VMM program 113 is a software program for realizing virtualization technology in which a plurality of OSs (which may include multiple instances of the same OS version) operate on a computer device, and is read out by the CPU 10 to realize the management between each software and the hardware resource. The CPU 10 reads out and executes the VMM program 113 to perform the basic control of the operation of the hardware corresponding to each OS 101, 101, ....

The server management program 112 is a main program for performing various processes necessary for the server computer to operate as the information processing apparatus 1 according to the present invention. The CPU 10 reads out the server management program 112 and operates as the server management unit 102 so that the CPU 10 reads out and executes the corresponding OS program 111 according to a request for activation from the terminal device 2, 2, ..., which communication with the server management unit 102 is authenticated by the authentication device S, thereby activating each OS 101, 101, .... In this case, the CPU 10 operates as the server management unit 102 to perform assignment control of hardware, that is, the CPU 10, the memory 12, the communication unit 13, and the image transmitting device 3, 3, ... to each OS 101, 101, ... and search of non-assigned image transmitting device 3.

The CPU 10 operates the server management unit 102 to perform transmission and reception of control signal such as request signal and instruction signal with each terminal device 2, 2, ... through the communication unit 13, and makes a decision on whether to read out the setting information corresponding to one of the terminal devices 2 and activate the OS 101 or to shutdown (stop) one of the OS 101, and makes a decision on whether logged in or not. The CPU 10 operates as the server management unit 102 to perform a predetermined process of monitoring the operation of each OS, 101, 101, ..., and when the operation state of the OS 101 becomes a suspended state such as pause/standby etc., and detecting the same.

The memory 12 is used when the CPU 10 reads out the OS program 111, the server management program 112, and the VMM program 113, and further, is used to temporarily store various information when the CPU 10 reads out and executes each program and performs each process. Therefore, the memory 12 is logically divided into a plurality of memories, which are assigned to each OS 101, 101, ..., the server management unit 102, and the VMM 103.

The communication unit 13 is hardware for realizing communication with the terminal device 2, 2, ..., the authentication device S and the like through the network N2. The communication unit 13 is connected with the public communication network N1 (not shown) and each OS 101, 101, ... acquires various information such as published pictures, images, text data through the communication unit 13. The communication unit for connecting with the public communication network N1 may be separately arranged. The input/output unit 14 realizes input/output of various signals including the drawing instruction signal with the image transmitting devices 3, 3, ... to be hereinafter described.

The image transmitting device 3 is configured by a PCI (PCI-Express) board, and includes a Graphics Processing Unit (GPU) for generating the image signal representing the display screen based on the drawing instruction signal output through operation as each OS 101, 101, ... from the CPU 10 of the information processing apparatus 1, an input/output interface 31 for accepting an input/output signal with various input/output devices such as Universal Serial Bus (USB) interface, a conversion unit 32 for converting the image signal representing the display screen generated in the GPU to be input to a coding unit 33, a coding unit 33 of an encoder chip for compression coding the image signal converted by the conversion unit 32 to a digital motion picture of H. 264 etc.; and a communication unit 34 including a network card. The coding unit 33 may code the voice signal output from the CPU 10 to be multiplexed with the motion picture.

The image transmitting device 3 is configured to accept the image signal by the GPU, and is the same as the device referred to as a graphics card, Graphics Accelerator, and the like generally arranged in a personal computer device when viewed as a destination to which the drawing instruction signal corresponding to the process is output from the CPU 10 of the information processing apparatus 1. Therefore, arrangement of the image transmitting device 3 is effective in that the output process of the drawing instruction signal of the CPU 10 of the information processing apparatus 1 does not need to be greatly modified.

The input/output interface 31 of the image transmitting device 3 has a function of relaying the output signal to each input/output device such as a keyboard, a mouse, a speaker, including the voice signal output according to the process when the CPU 10 of the information processing apparatus 1 operates as each OS 101, 101, .... The input/output interface 31 also has a function of relaying the input signal from each input/output device connected to the terminal device 2 to the CPU 10 on which the corresponding OS 101 operates.

The communication unit 34 of the image transmitting device 3 performs a process of converting into a stream of IP packets the digital motion picture (compressed video) output from the coding unit 33 and the input/output signal relayed by the input/output interface 31. If the input/output interface 31 is a USB interface, the process of converting to IP packets may be a simple process since the input/output signal is already packetized. The CPU 10 of the information processing apparatus 1 outputs to the image transmitting device 3, 3, ... destination information such as address of the terminal device 2 through the input/output unit 14 according to the respective OS 101, 101, .... The communication unit 34 of the image transmitting device 3 stores the image signal in the IP packets based on the destination information and outputs the same. The IP packet stream output from the communication unit 34 of the image transmitting device 3 is transmitted to the terminal device 2 corresponding to the address through a communication path of a router and the like.

The destination information output by the CPU 10 of the information processing apparatus 1 to the image transmitting device 3 does not need to directly specify the address of the terminal device 2. The destination information may be a network address and a port number assigned to the communication unit 34 of the image transmitting device 3 or the communication unit of another device, where the communication unit 34 outputs IP packets storing the image signal to the port indicated in the destination information to be acquired from the relevant port in the terminal device 2.

On the other hand, the terminal device 2 includes a CPU 211 for controlling each configuring unit, a communication unit 21 including a network card, an input/output interface 22 for accepting an input/output signal with various devices such as USB interface, a decoding unit 23 or a decoder chip for decoding the digital motion picture of H. 264 and the like, and a conversion unit 24 for converting the decoded image signal to be input to the display 25.

The communication unit 21 of the terminal device 2 acquires the motion picture in the form of the packetized output signal from the IP packets acquired from the image transmitting device 3 assigned to the corresponding OS 101, and outputs the same to the decoding unit 23 and the input/output interface 22.

The input/output interface 22 of the terminal device 2 is connected with the input/output device such as a keyboard 26, a mouse 27, a speaker 28, to transmit and receive the input/output signal with each input/output device. If the terminal device 2 is a television receiver or an STB, the input/output interface 22 may receive an input/output signal similar to the input/output device from a remote controller 29.

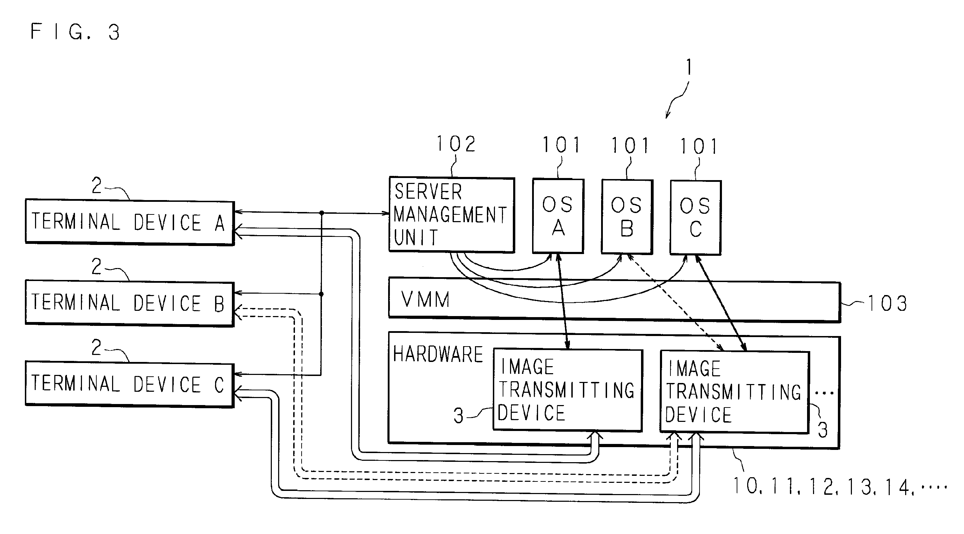

The outline of processes performed between the information processing apparatus 1 and the terminal devices 2, 2, ..., configured as a above until use of thin client becomes possible will now be described. FIG. 3 is an explanatory view showing an outline of processes performed between the information processing apparatus 1 and the terminal devices 2, 2, ... according to the first embodiment. In the explanatory view of FIG. 3, the server management unit 102 and the plurality of OSs 101, 101, ... are executed independently through the operation of the VMM 103 on the hardware such as the CPU 10, the memory 12, the communication unit 13, the image transmitting device 3 in the information processing apparatus 1. The correspondence relationship between each OS 101, 101, ... and each terminal device 2, 2, ... is also shown. In the explanatory view of FIG. 3, an OS 101 "A" corresponds to the terminal device 2 "A", an OS 101 "B" corresponds to the terminal device 2 "B", and an OS 101 "C" corresponds to the terminal device 2 "C".

First, in the explanatory view of FIG. 3, the solid line shows that the communication for transmitting and receiving the activation request signal etc. for requesting activation is established between each terminal device 2, 2, ..., and the server management unit 102. The activation of the OS 101, 101, ... corresponding to the respective terminal device 2, 2, ... is performed through the VMM 103 by the operation of the server management unit 102 in response to the activation request signal from the terminal device 2. When the activation request signal is transmitted from the terminal device 2 "A" to the server management unit 102, the CPU 10 operating as the server management unit 102 activates the corresponding OS 101 "A" through the VMM 103, but in this case, searches a available image transmitting device 3 from a plurality of image transmitting devices 3, 3, ... and assigns the same to the OS 101 "A". The CPU 10 operating as the OS 101 "A" inputs the drawing instruction signal output according to the process to the assigned image transmitting device 3. The image transmitting device 3 generates the image signal representing the display screen based on the input drawing instruction signal, codes the image signal to the motion picture, and transmits the motion picture to the terminal device 2 "A". The white arrow shows the motion picture being transmitted or received. The terminal device 2 "A" then starts to operate as a thin client.

Here, assume the OS 101 "B" also starts to operate. The CPU 10 operating as the OS 101 "B" however does not receive the input signal from the keyboard 26 and the like from the terminal device 2 "B" through the image transmitting device 3, and thus the operation state thereof transitions to the suspended state. The CPU 10 operating as the server management unit 102 detects that the operation state of the OS 101 "B" has transitioned to the suspended state, and thus invalidates and separates the image transmitting device 3 assigned to the OS 101 "B" to be made available to other terminal devices 2, 2, .... In the explanatory view of FIG. 3, the white arrow of broken line shows that the motion picture that has been transmitted or received is no longer transmitted.

Meanwhile, if the activation request signal is transmitted from the terminal device 2 "C" to the server management unit 102, the CPU 10 operating as the server management unit 102 searches for an available image transmitting device 3 of the plurality of image transmitting devices 3, 3, ... when activating the corresponding OS 101 "C" through the VMM 103, and assigns the image transmitting device 3 that was assigned to the OS 101 "B" to the OS 101 "C". The terminal device 2 "C" then starts to operate as a thin client.

In this manner, the information processing apparatus 1 is configured to execute a plurality of OS 101, 101, ... and is arranged with a plurality of image transmitting devices 3, 3, ... to realize thin client through a picture transfer method. The processing load of the CPU 10 of the information processing apparatus 1 is reduced by coding the picture by the image transmitting device 3, 3, ... or hardware. The CPU 10 operating as each OS 101, 101, ... does not require special processing such as a process of generating an image signal based on the drawing instruction signal of the screen corresponding to the respective process, and a process of coding the image signal to the motion picture. The output of the drawing instruction signal for drawing the screen corresponding to the executing process is a basic operation as an OS including the GUI, CUI, and the like. Furthermore, in the present invention, there is no need to correspond the image transmitting device 3, 3, ... to each terminal device 2, 2, ..., that is, each OS 101, 101, ... at one on one. The CPU 10 operating as the server management unit 102 dynamically performs the assignment control of assigning the image transmitting device 3 that is no longer used in one OS 101 to another terminal device 2, 2, ... so that a greater number of terminal devices 2 , 2, ... can operate as a thin client with small amount of hardware (image transmitting device 3, 3, ...).

As shown in the explanatory view of FIG. 3, the motion picture of the display screen is directly transmitted to each terminal device 2, 2, ... from the image transmitting device 3, 3, ... which is a hardware resource. Therefore, the transmission load of the information processing apparatus 1 is reduced. In the explanatory view of FIG. 3, the image transmitting device 3, 3, ... respectively includes an independent communication means, so that the communication path between the terminal devices 2, 2, ... and the information processing apparatus 1 is divided to two systems of a path of transmission and reception of control signal such as activation/stop request signal, and a path of transmission and reception of the motion picture of the display screen. Thus, the path of the control signal for connection and communication, and the path for transmission and reception of data such as motion picture and input/output signal related to operation are separate paths, whereby safety of connection between the terminal device 2, 2, ... and the information processing apparatus 1 can be taken into consideration and the design of the network can be simplified.

The assignment of the image transmitting device 3, 3, ... and the search for an available image transmitting device 3 by the CPU 10 operating as the server management unit 102 as shown in the explanatory view of FIG. 3 are performed as below. An ID (identification information, e.g., number) is corresponded to each image transmitting device 3, 3, ..., and a management table showing the correspondence relationship of the ID and the assigned OS 101, and an available table in which the ID of the available image transmitting device 3 that is not assigned is listed are stored in the memory 12 or the storage unit 11 to and from which the CPU 10 operating as the server management unit 102 can read and write. The CPU 10 operating as the server management unit 102 deletes the ID of the image transmitting device 3 from the available table and adds the correspondence relationship with the corresponding OS 101 to the management table every time the image transmitting device 3 is assigned. The CPU 10 operating as the server management unit 102 adds the ID of the image transmitting device 3 to the available table and deletes the correspondence relationship from the management table every time the image transmitting device 3 is invalidated.

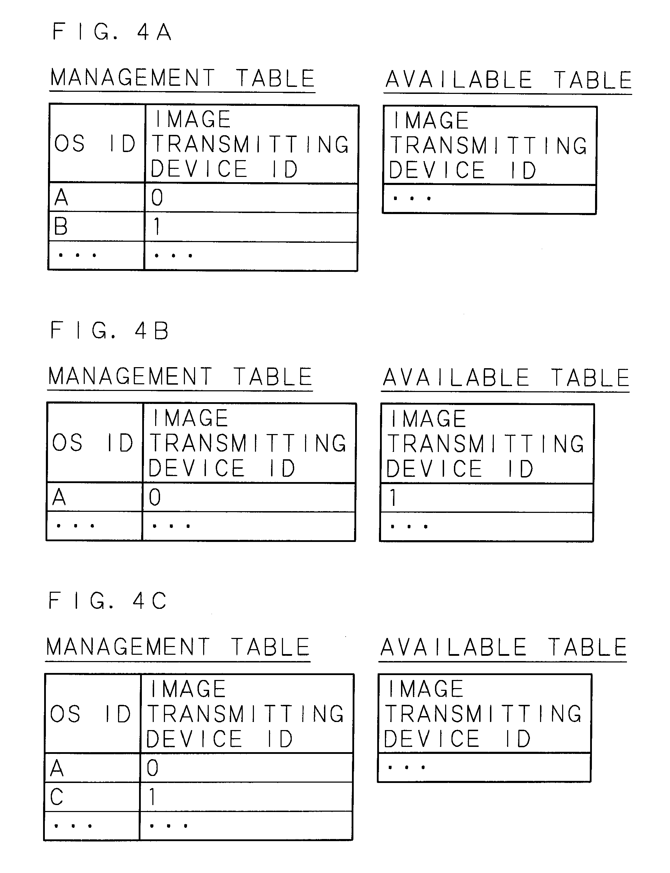

FIGS. 4A to 4C are explanatory views showing a content example of the management table and the available table of the image transmitting device 3, 3, ... stored in the storage unit 11 of the information processing apparatus 1 according to the first embodiment. The content example shown in the explanatory views of FIGS. 4A to 4C is corresponded to the example shown in the explanatory view of FIG. 3. FIG. 4A shows the management table and the available table before the OS 101 "B" transitions to the suspended state. FIG. 4B shows the management table and the available table after the OS 101 "B" transitions to the suspended state and before the OS 101 "C" is activated. FIG. 4C shows the management table and the available table after the OS 101 "C" is activated.

As shown in FIG. 4A, before the OS 101 "B" transitions to the suspended state, the correspondence relationship of the OS 101 "A" and the image transmitting device 3 of ID "0", and the OS 101 "B" and the image transmitting device 3 of ID "1" are stored in the management table. As shown in FIG. 4B, after the OS 101 "B" transitions to the suspended state, the CPU 10 operating as the server management unit 102 detects the transition, and invalidates the image transmitting device 3 of ID "1", so that the correspondence relationship of the OS 101 "A" and the image transmitting device 3 of ID "0" is stored in the management table, and the image transmitting device 3 of ID "1" is added to the available table. As shown in FIG. 4C, after the OS 101 "C" is activated, the correspondence relationship of the OS 101 "C" and the image transmitting device 3 of ID "1" is added to the management table, and the image transmitting device 3 of ID "1" is deleted from the available table.

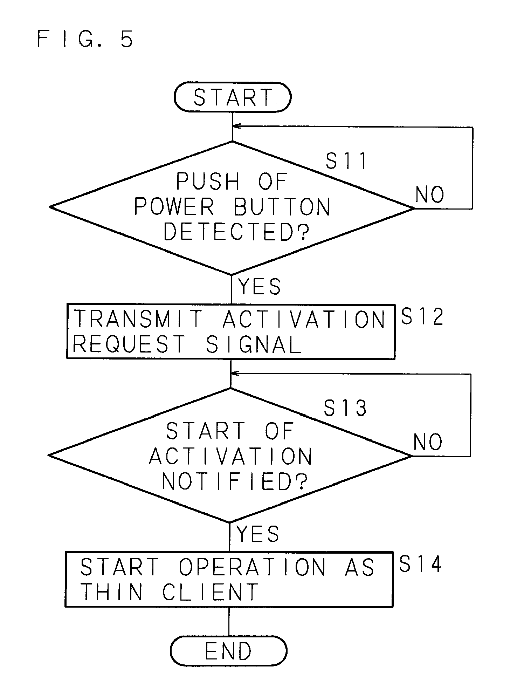

A specific processing procedure performed between the information processing apparatus 1 and the terminal device 2 will now be described. FIG. 5 is an operation flow showing one example of a processing procedure in which activation of the OS 101 is requested from the terminal device 2 to the information processing apparatus 1 according to the first embodiment. The terminal device 2 determines whether or not push of a power button is detected by the input/output interface 22 (operation S11). Therefore, whether or not the terminal device 2 starts the operation as the thin client is determined. Such determination may be made based on whether or not a signal of power ON from the remote controller is accepted.

When determining that the push of the power button is not detected (S11: NO), the terminal device 2 returns the process to operation S11, and waits until determined that the push of the power button is detected. When determining that the push of the power button is detected (S11: YES), the terminal device 2 transmits the activation request signal to the information processing apparatus 1 from the communication unit 21 (operation S12).

The terminal device 2 determines whether or not start of activation is notified from the information processing apparatus 1 with respect to the transmitted activation request signal (operation S13). The destination (address and port) to acquire the motion picture of the display screen from the information processing apparatus 1 may be recognized according to such notification. When determining that the start of activation is not notified from the information processing apparatus 1 (S13: NO), the terminal device 2 returns the process to operation S13, and waits until determining that the start of activation is notified. When determining that the start of activation is notified from the information processing apparatus 1 (S13: YES), the terminal device 2 starts the operation as a thin client (operation S14), and terminates the processing procedure of requesting activation.

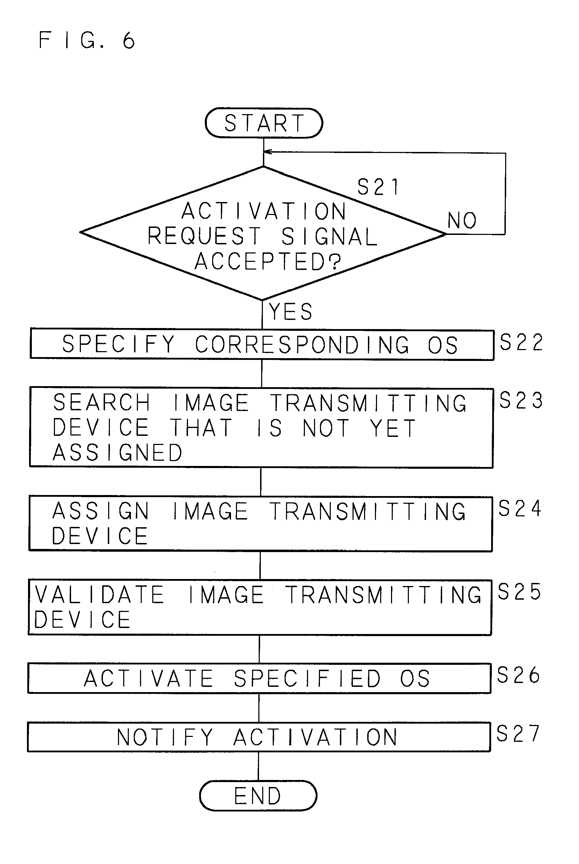

The operation of the information processing apparatus 1 corresponding to the request for activation from the terminal device 2 shown in the operation flow of FIG. 5 will be described below. FIG. 6 is an operation flow showing one example of a processing procedure of when the CPU 10 of the information processing apparatus 1 according to the first embodiment accepts the activation request signal from one terminal device 2. The processing procedure shown in the operation flow of FIG. 6 is the processing procedure performed when the CPU 10 of the information processing apparatus 1 operates as the server management unit 102.

The CPU 10 of the information processing apparatus 1 determines whether or not the activation request signal is accepted from the terminal device 2 (operation S21). When determining that the activation request signal is not accepted (521: NO), the CPU 10 of the information processing apparatus 1 returns the process to operation S21, and waits until determining that the activation request signal is accepted.

When determining that the activation request signal is accepted (S21: YES), the CPU 10 of the information processing apparatus 1 specifies the OS 101 corresponding to the terminal device 2 or the source of the activation request signal (operation S22). Here, for example, the CPU 10 of the information processing apparatus 1 stores the correspondence relationship between the ID of each terminal device 2, 2, ... and the ID of the corresponding OS 101, and specifies the corresponding OS 101 from the address, the ID, and the like of the terminal device 2 of the source when accepting the activation request signal.

The CPU 10 of the information processing apparatus 1 searches for the image transmitting device 3 that is not yet assigned (operation S23), and assigns the searched image transmitting device 3 to the specified OS 101 (operation S24). Specifically, the CPU 10 performs the search and assignment process based on the management table and the available table as shown in the explanatory views of FIGS. 4A to 4C.

The CPU 10 of the information processing apparatus 1 validates the assigned image transmitting device (operation S25), activates the OS 101 specified in operation S22 (operation S26), notifies that activation has started to the terminal device 2 or the source of the activation request signal (operation S27), and terminates the process of activation.

As shown in the operation flows of FIG. 5 and FIG. 6, the CPU 10 of the information processing apparatus 1 assigns the image transmitting device 3 dynamically with respect to the activation request signal. Therefore, the image transmitting device 3 does not need to be prepared at one on one with respect to each terminal device 2, 2, ..., and a greater number of terminal devices 2, 2, ... can operate as a thin client with a minimum hardware configuration.

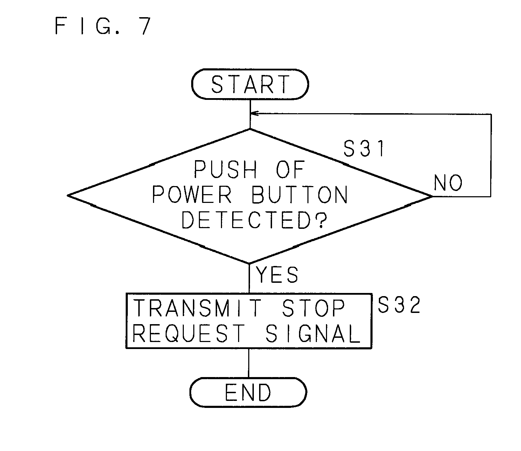

FIG. 7 is an operation flow showing one example of a processing procedure in which stop of the OS 101 is requested to the information processing apparatus 1 from the terminal device 2 in the first embodiment. The terminal device 2 determines whether or not the push of the power button is detected by the input/output interface 22 (operation S31). Therefore, whether or not the terminal device 2 stops the operation as the thin client is determined. Such determination may be made based on whether or not a signal of power OFF from the remote controller is accepted.

When determining that the push of the power button is not detected (S31: NO), the terminal device 2 returns the process to the operation S31, and waits. When determining that the push of the power button is detected (S31: YES), the terminal device 2 transmits the stop request signal to the information processing apparatus 1 from the communication unit 21 (operation S32), and terminates the process for requesting stop.

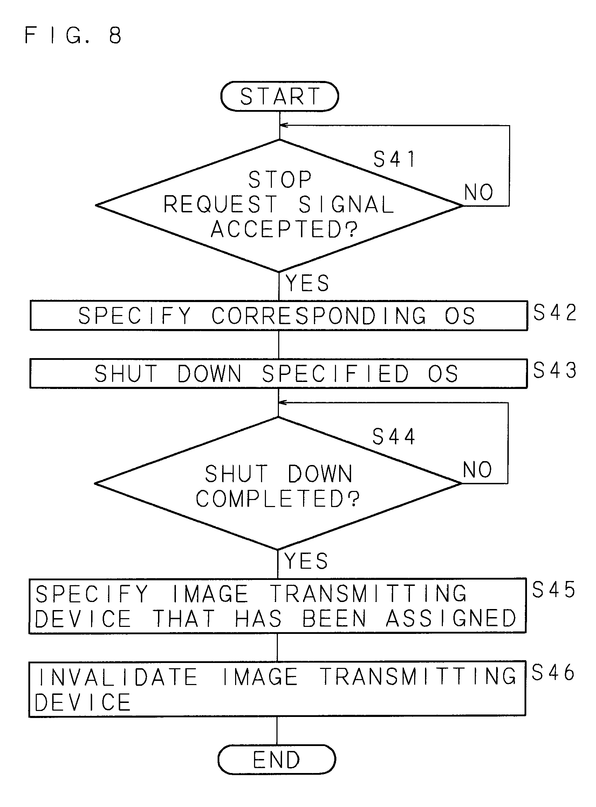

The operation of the information processing apparatus 1 corresponding to the request for stop from the terminal device 2 shown in the operation flow of FIG. 7 will be described. FIG. 8 is an operation flow showing one example of a processing procedure of when the CPU 10 of the information processing apparatus 1 according to the first embodiment accepts the stop request signal from one terminal device 2. The processing procedure shown in the operation flow of FIG. 8 is the processing procedure performed when the CPU 10 of the information processing apparatus 1 operates as the server management unit 102.

The CPU 10 of the information processing apparatus 1 determines whether or not the stop request signal is accepted from the terminal device 2 (operation S41). When determining that the stop request signal is not accepted (S41: NO), the CPU 10 of the information processing apparatus 1 returns the process to operation S41, and waits until determining that the stop request signal is accepted.

When determining that the stop request signal is accepted (S41: YES), the CPU 10 of the information processing apparatus 1 specifies the OS 101 corresponding to the terminal device 2 or the source of the stop request signal (operation S42). The CPU 10 of the information processing apparatus 1 shuts down the specified OS 101 (operation S43), and determines whether or not shutdown is completed (operation S44). When determining that the shutdown is not completed (S44: NO), the CPU 10 of the information processing apparatus 1 returns the process to operation S44 and waits until the shutdown is completed.

When determining that the shutdown is completed (S44: YES), the CPU 10 of the information processing apparatus 1 specifies the image transmitting device 3 that is not assigned from the management table (operation S45), invalidates the specified image transmitting device 3 (operation S46), and terminates the process of stop.

After the process of operation S46, the CPU 10 of the information processing apparatus 1 deletes the ID of the invalidated image transmitting device 3 from the management table as described in the explanatory views of FIGS. 4A to 4C, and adds the ID to the available table.

According to such configuration and processing procedure, services can be provided to a great number of users with a smaller configuration even if the thin client architecture becomes large scale.

The processing procedure shown in the operation flows of FIG. 5 to FIG. 8 show the processes in which each terminal device 2, 2, ... transmits the activation request signal and the activation stop signal to request for activation and stop of the corresponding OS 101, 101, ... when starting or terminating the operation as a thin client, and in which the CPU 10 of the information processing apparatus 1 operates as the server management unit 102 and accepts the signals, and assigns the image transmitting device 3.

However, the timing of assigning the image transmitting device 3, 3, ... to the OS 101, 101, ... corresponding to the respective terminal device 2, 2, ... is not necessarily when each terminal device 2, 2, ... starts or terminates the operation as the thin client. For instance, the timing may be when the operation in the terminal device 2 is not performed for a while, and the operation state of the corresponding OS 101 transitions to the pause/standby state. This is because the user may not necessarily request shutdown to the terminal device 2 every time. When the terminal device 2 is realized with a configuration of being included in the television device, and the like, switch may be made to television viewing and the time the terminal device 2 is not used as the thin client might continue for a long period of time. Furthermore, since the operation state of each OS 101, 101, ... can be managed by the server management unit 102 of the information processing apparatus 1, the image transmitting device 3, 3, ... may be assigned to each OS 101, 101, ... at such timing.

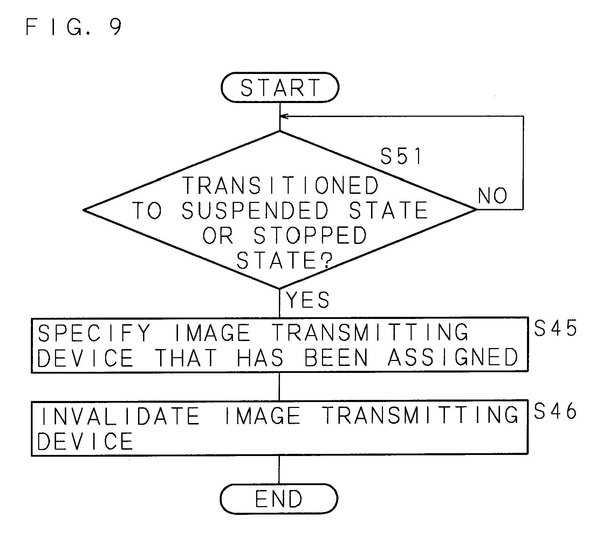

FIG. 9 is an operation flow showing one example of a processing procedure corresponding to the operation state of the OS 101 corresponding to one terminal device 2 by the CPU 10 of the information processing apparatus 1 according to the first embodiment. The process of invalidating the image transmitting device 3 is the same as the process shown in the operation flow of FIG. 8, and thus the same operation numbers are denoted and the detailed description thereof will omitted.

The CPU 10 of the information processing apparatus 1 operates as the server management unit 102 and monitors the operation state of each OS 101, 101, ..., and determines whether or not the operation state of one OS 101 has transitioned to the suspended state of pause/standby etc. or the stopped state by the shutdown operation (operation S51). When determining that the operation state of one OS 101 has not transitioned to neither the suspended state or the stopped state (S51: NO), the CPU 10 of the information processing apparatus 1 returns the process to the operation S51, and continues to monitor the operation state.

When determining that the operation state of one OS 101 has transitioned to the suspended state or the stopped state (S51: YES), the CPU 10 of the information processing apparatus 1 invalidates the assigned image transmitting device 3 (S45, S46), and terminates the process.

According to the processing procedure shown in the operation flow of FIG. 9, the image transmitting device 3 that is no longer necessary can be assigned to another OS 101, 101, ... when the operation state of the OS 101 transitions to the suspended state or the stopped state, so that a greater number of terminal device 2, 2, ... can operate as the thin client.

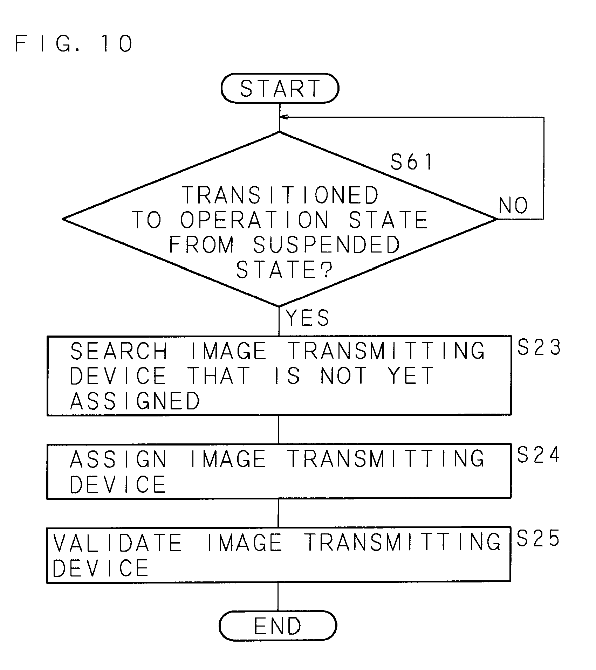

A case where the OS 101 which operation state is transitioned to the suspended state transitions to the operation state will be described. FIG. 10 is an operation flow showing one example of a processing procedure corresponding to the operation state of the OS 101 corresponding to one terminal device 2 by the CPU 10 of the information processing apparatus 1 according to the first embodiment. In this case as well, the process of assigning the image transmitting device 3 is the process similar to the processing procedure shown in the operation flow of FIG. 6, and thus the same operation numbers are denoted and the detailed description thereof will be omitted.

The CPU 10 of the information processing apparatus 1 operates as the server management unit 102 and monitors the operation state of each OS 101, 101, ..., and determines whether or not the operation state of one OS 101 has transitioned from the suspended state to the operation state (operation S61). When determining that the operation state of one OS 101 has not transitioned to the operation state (S61: NO), the CPU 10 of the information processing apparatus 1 returns the process to the operation S61, and continues to monitor the operation state.

When determining that the operation state of one OS 101 has transitioned to the operation state (S61: YES), the CPU 10 of the information processing apparatus 1 assigns the image transmitting device 3 that is not assigned to the OS 101 and validates the same (S23 to S25), and terminates the process after achieving a state in which a motion picture of the display screen of the OS 101 to be in the operation state can be transmitted to the terminal device 2.

As shown in the operation flow of FIG. 9 and FIG. 10, the CPU 10 of the information processing apparatus 1 operates as the server management unit 102 even if request from the terminal device 2 is not made, and controls the assignment of the image transmitting device 3 to each OS 101, 101, ...according to the operation state of each OS 101, 101, ....

Furthermore, if the operation in the terminal device 2 is not performed for a while, and the input signal from the input/output device is stopped from the input/output device such as the keyboard 26, the mouse 27, to the corresponding OS 101 (operation is not performed), the image transmitting device 3 can be controlled to be assigned to another OS 101, 101, ....

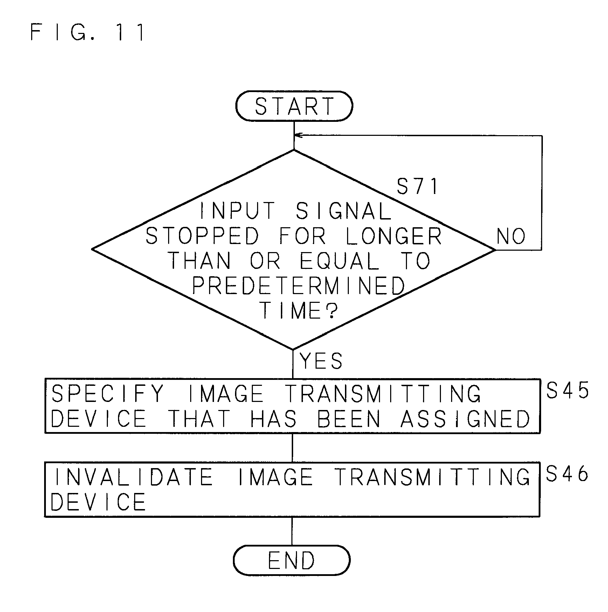

FIG. 11 is an operation flow showing one example of a processing procedure corresponding to the operation state corresponding to one terminal device 2 by the CPU 10 of the information processing apparatus 1 according to the first embodiment. The process of invalidating the image transmitting device 3 is the same as the process shown in the operation flow of FIG. 8 and thus the same operation numbers are denoted and the detailed description thereof will be omitted.

The CPU 10 of the information processing apparatus 1 operates as the server management unit 102, and monitors the input signal related to the operation from the input/output device which each OS 101, 101, ... receives from the corresponding terminal device 2. The CPU 10 of the information processing apparatus 1 determines whether or not the input signal from the input/output device is stopped for longer than or equal to a predetermined time with respect to one OS 101 (operation S71). When determining that the input signal is input within a predetermined time with respect to one OS 101 (S71 : NO), the CPU 10 of the information processing apparatus 1 returns the process to operation S71, and continues to monitor the input signal.

When determining that the input signal is stopped over longer than or equal to a predetermined time with respect to one OS 101 (S71: YES), the CPU 10 of the information processing apparatus 1 invalidates the assigned image transmitting device 3 (S45, S46), and terminates the process.

According to the processing procedure shown in the operation flow of FIG. 11, even if no operation is performed on one OS 101 and the idle state is obtained, the image transmitting device 3 that is no longer necessary can be assigned to another OS 101, 101, ..., and a greater number of terminal devices 2, 2, ... can operate as the thin client. With respect to the OS 101 that is not assigned with the image transmitting device 3 as a result of the processing procedure shown in the operation flow of FIG. 11, the signal similar to the activation request signal is transmitted to the communication unit 13 of the information processing apparatus 1 by pushing the power button etc., as shown in the operation flow of FIG. 5, so that the assignment of the image transmitting device 3 is again performed and operation as a thin client can be resumed.

Furthermore, the image transmitting device 3, 3, ... may be assigned according to the instruction signal from the corresponding terminal device 2, 2, ... during the activation of each OS 101, 101, .... In this case, the terminal devices 2, 2, ... may generate and transmit a transmission start signal and a transmission stop signal for instructing start of transmission and stop of transmission on the transmission of the motion picture from the image transmitting device 3 by the operation of the user. Depending on whether or not the input signal from each input/output device connected to the input interface is detected, the terminal device 2, 2, ... transmits the transmission stop signal when determining that the operation is not performed for longer than or equal to a predetermined time, and transmits the transmission start signal to again request for transmission of the motion picture when input by the input/output device is detected after the idle state.

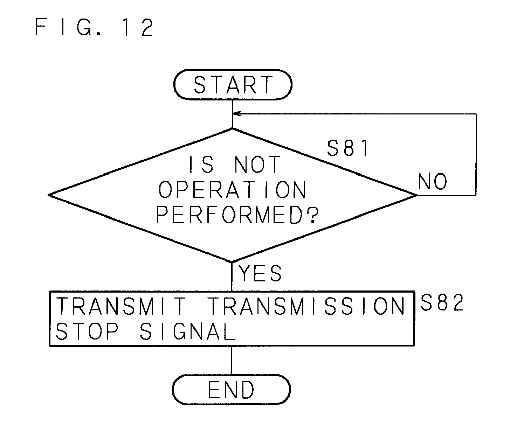

FIG. 12 is an operation flow showing one example of a processing procedure in which the transmission stop signal is transmitted from the terminal device 2 to the information processing apparatus 1 according to the first embodiment. The terminal device 2 determines whether or not the operation is performed for longer than or equal to a predetermined time according to the detection of the input signal from each device (operation S81). When determining that the operation is performed in the past within a predetermined time (S81: NO), the terminal device 2 returns the process to operation S81, and continues the process of determining whether or not the operation is performed.

When determining that the operation is not performed for longer than or equal to a predetermined time (S81: YES), the terminal device 2 transmits the transmission stop signal to the information processing apparatus 1 from the communication unit 21 (operation S82). The transmission stop signal is transmitted so as to be received by the communication unit 13 of the information processing apparatus 1.

The transmission process of the transmission stop signal in operation S82 may be performed not only from the determination process of operation S81 but from the detection of a corresponding signal from the keyboard 26 and the remote controller 29.

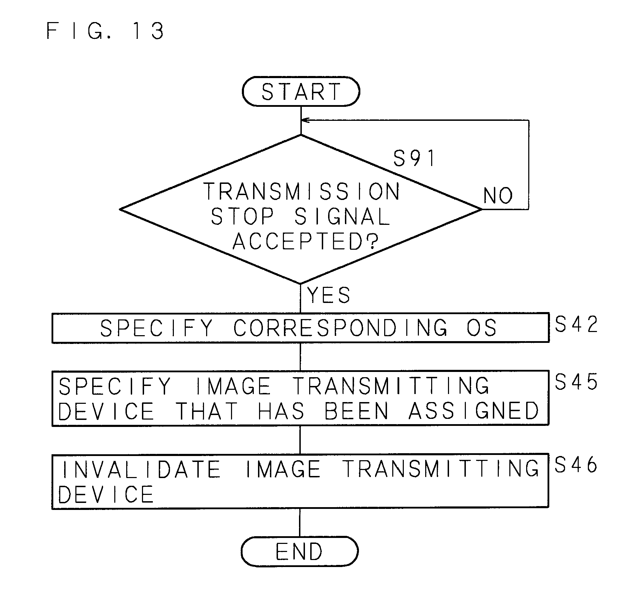

FIG. 13 is an operation flow showing one example of a processing procedure of when the CPU 10 of the information processing apparatus 1 according to the first embodiment accepts the transmission stop signal from one terminal device 2. The processing procedure shown in the operation flow of FIG. 13 is also the processing procedure performed when the CPU 10 of the information processing apparatus 1 operates as the server management unit 102. The process of invalidating the image transmitting device 3 is the same as the process shown in the operation flow of FIG. 8, and thus the same operation numbers are denoted and the detailed description thereof will be omitted.

The CPU 10 of the information processing apparatus 1 determines whether or not the transmission stop signal is accepted by the communication unit 13 from the terminal device 2 (operation S91). When determining that the transmission stop signal is not accepted (S91: NO), the CPU 10 of the information processing apparatus 1 returns the process to operation S91 and waits until determining that the transmission stop signal is accepted.

When determining that the transmission stop signal is accepted (S91: YES), the CPU 10 of the information processing apparatus 1 invalidates the image transmitting device 3 assigned to the OS 101 corresponding to the terminal device 2 or the source of the transmission stop signal (S42, S45, S46), and terminates the process.

The recovery of when transmission of the motion picture from the image transmitting device 3 is stopped in response to the operation of the user will now be described. The terminal device 2 is in the idle state, and when detecting input by the input/output device after transmitting the transmission stop signal, transmits the transmission start signal.

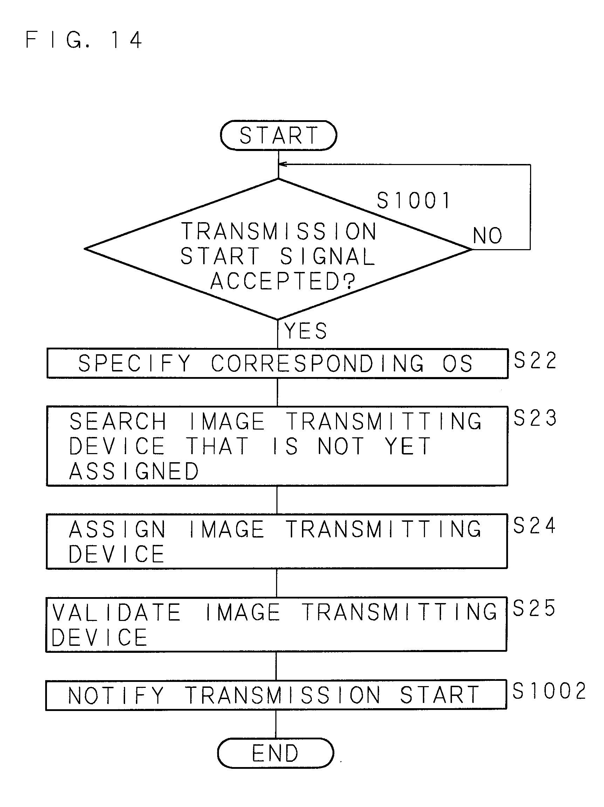

FIG. 14 is an operation flow showing one example of a processing procedure of when the CPU 10 of the information processing apparatus 1 according to the first embodiment accepts the transmission start signal from one terminal device 2. The processing procedure shown in the operation flow of FIG. 14 is the processing procedure performed when the CPU 10 of the information processing apparatus 1 operates as the server management unit 102. The process of assigning the image transmitting device 3 is the same as the process shown in the operation flow of FIG. 6, and thus the same operation numbers are denoted and the detailed description thereof will be omitted.

The CPU 10 of the information processing apparatus 1 determines whether or not the transmission start signal is accepted by the communication unit 13 from the terminal device 2 (operation 51001). When determining that the transmission start signal is not accepted (S1001: NO), the CPU 10 of the information processing apparatus 1 returns the process to operation S1001, and waits until determining that the transmission start signal is accepted. When determining that the transmission start signal is accepted (S1001: YES), the CPU 10 of the information processing apparatus 1 assigns the image transmitting device 3 that is not assigned to the corresponding OS 101 to the relevant OS 101 and validates the same (S22 to S25), notifies the terminal device 2 that the transmission of the motion picture has started (operation S1002), and terminates the process.

In the first embodiment, the information processing apparatus 1 operates as the information processing apparatus 1 applied with the virtual technology by the VMM program 113. However, the present invention is not limited thereto, and it is also technically possible to realize the present invention by corresponding the information processing apparatus 1, the image transmitting device 3, and the terminal device 2 at one on one without using the virtual technology. However, it is desirable to apply the virtual technology to utilize a plurality of terminal devices 2, 2, ... in one information processing apparatus 1. Furthermore, as shown in the first embodiment, a configuration that enables a greater number of terminal devices 2, 2, ... to be used with fewer image transmitting devices 3, 3, ...by performing a control of assigning the image transmitting devices 3, 3, ... to each OS 101, 101, ... by the server management unit 102 or another software is desirable.

Furthermore, in the first embodiment, a configuration in which the image signal generated by the GPU of the image transmitting device 3 is always coded and transmitted as the motion picture is adopted. However, the image signal may be transmitted as it is without necessarily being coded to the motion picture. If the transmission load of the network N2 and the communication unit 34 is taken into consideration, however, it is desirable to transmit the compression coded motion picture.

### <Second embodiment>

In the second embodiment, a configuration in which a device for transmitting and receiving a picture is separately arranged on the interior or the exterior of the information processing apparatus 1 is adopted, and a configuration of not only transmitting the motion picture of the display screen from the image transmitting device 3 for each terminal device 2, 2, ... to operate as the thin client, but also transmitting the motion picture serving as a content from the image transmitting device 3 to each terminal device 2, 2, ... is shown.

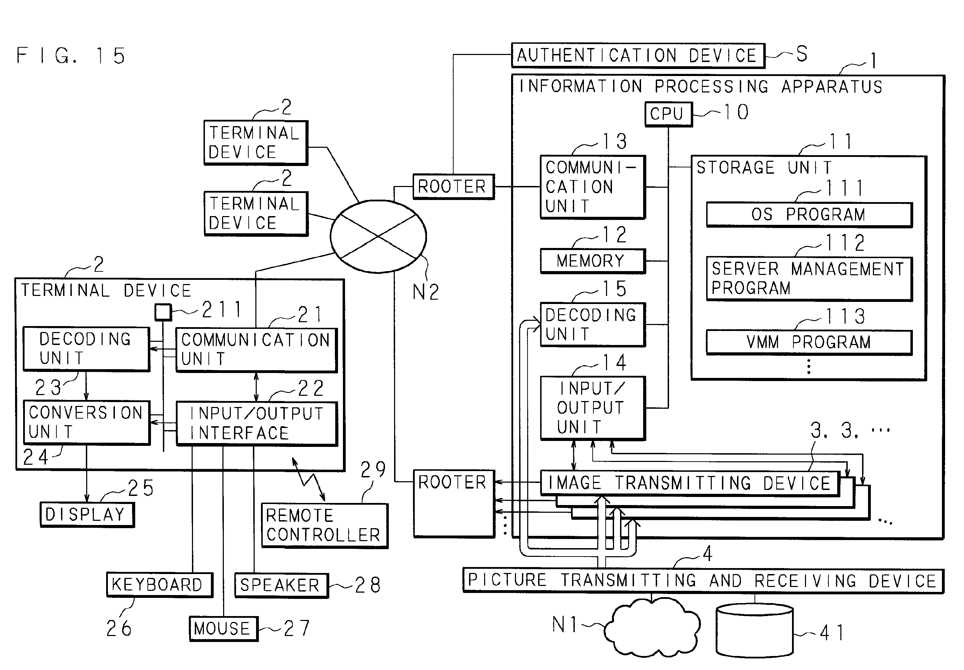

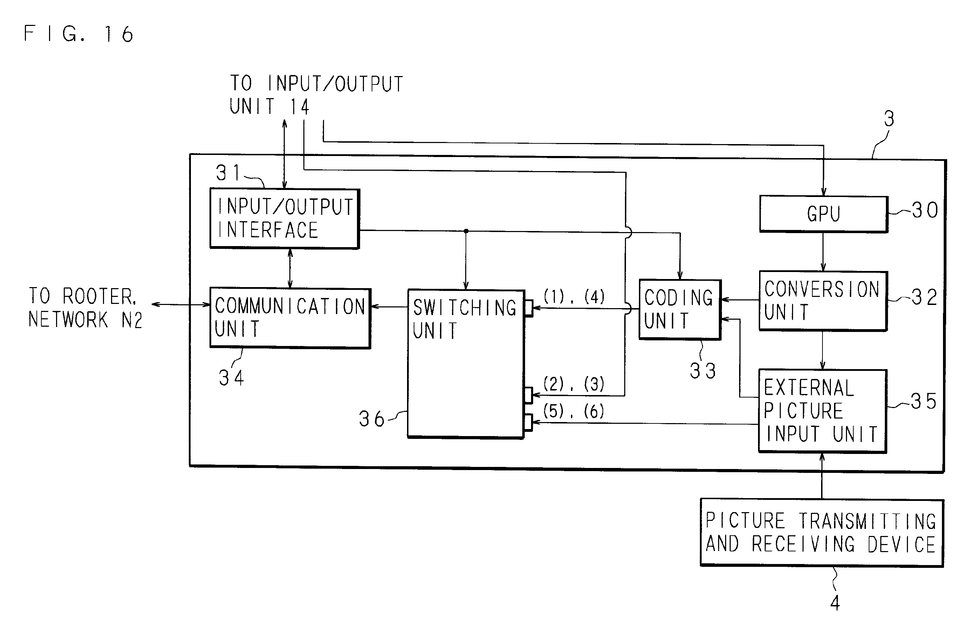

FIG. 15 is a block diagram showing an inner configuration of the information processing apparatus 1 and the terminal device 2, 2, ... according to the second embodiment, and FIG. 16 is a block diagram showing an inner configuration of the image transmitting device 3, 3, ... arranged in the information processing apparatus 1. The difference in hardware with the first embodiment lies in the internal configuration of the image transmitting device 3, 3, ... arranged in the information processing apparatus 1, and in that a picture transmitting and receiving device 4 is included in the thin client architecture. The picture transmitting and receiving device 4 may be arranged inside the information processing apparatus 1.

The picture transmitting and receiving device 4 collects and receives the pictures from the public communication network N1 such as Internet or a content database 41. The picture transmitting and receiving device 4 has a function of performing compression coding based on the digital motion picture of H. 264 etc. and outputting the resultant to the outside as necessary. The receiving picture is sometimes attached with information for displaying data related to the picture. For instance, as in the data in the terrestrial digital broadcasting implemented in Japan, data for displaying various data such as program information, weather forecast by image other than text data and program on the screen is expressed with BML (Broadcast Markup Language). The picture transmitting and receiving device 4 also receives an information display signal for displaying the data on the screen.

The picture transmitting and receiving device 4 may be configured to accept the instruction signal and perform reception, coding, and transmission of the picture according to the instruction. In this case, collection, coding, and transmission of the picture by the picture transmitting and receiving device 4 can be controlled according to the operation of the CPU 10 of the information processing apparatus 1.

The information processing apparatus 1 according to the second embodiment further includes a coding unit 15. The coding unit 15 has the same configuration as the coding unit 33 arranged in the image transmitting device 3, 3, ... and may be realized by hardware or may be realized by software. The CPU 10 of the information processing apparatus 1 operates as each OS 101, 101, ... or the server management unit 102 to acquire the picture from the picture transmitting and receiving device 4, code the picture by means of the coding unit 15, and input the resultant to the image transmitting device 3, 3, .... The CPU 10 of the information processing apparatus 1 also operates as each OS 101, 101, ... or the server management unit 102 to generate data expressed by BML, and input the same to the image transmitting device 3, 3, ... as information display signal.

The image transmitting device 3, 3, ... according to the second embodiment further includes an external picture input unit 35 for accepting the motion picture output from the picture transmitting and receiving device 4 as shown in the block diagram of FIG. 16, and a switching unit 36 for accepting a transmission switch signal indicating which signal of a plurality of image signals (motion picture) and the information display signal to transmit from the communication unit 34.

The external picture input unit 35 is connected to the picture transmitting and receiving device 4 and is also connected to the coding unit 33, where if the motion picture received from the picture transmitting and receiving device 4 is not coded, the signal is coded by the image transmitting device 3, 3, ....

The switching unit 36 selects one or a plurality of the plurality of motion pictures input to the switching unit 36 and inputs the same to the communication unit 34 according to the transmission switch signal input from the input/output interface 31. The signal to be input to the switching unit 36 includes,
(1) motion picture in which the image signal of the display screen generated by the GPU is coded by the coding unit 33;
(2) motion picture coded by the coding unit 15 when the CPU 10 of the information processing apparatus 1 operates as each OS 101, 101, ... or the sever management unit 102;
(3) information display signal generated when the CPU 10 of the information processing apparatus 1 operates as each OS 101, 101, ... or the sever management unit 102;
(4) motion picture in which the non-coded motion picture input from the picture transmitting and receiving device 4 is coded by the coding unit 33;
(5) coded motion picture input from the picture transmitting and receiving device 4; and
(6) information display signal input from the picture transmitting and receiving device 4.

The switching unit 36 selects one or a plurality of signals from (1) to (6). For instance, only (1), only (2), or a combination of (1) and (3), (5) and (6), and the like may be selected.

The transmission switch signal input through the input/output interface 31 to the switching unit 36 can be input by the CPU 10 of the information processing apparatus 1 or may be input from the terminal device 2. The content of the image signal (motion picture) and the information display signal to be transmitted may be changed if the CPU 10 of the information processing apparatus 1 inputs the transmission switch signal. Since the input/output interface 22 of the terminal device 2 has a function of transmitting the transmission switch signal to the communication unit 34 of the image transmitting device 3 or the communication unit 13 of the information processing apparatus 1 according to the operation by the user through the communication unit 21, the content to be displayed on the display 25 can be changed from the terminal device 2.

Specifically, as one example, according to a configuration in which a table showing the combination of each signal is stored in the switching unit 36, and correspondence with the number represented by the transmission switch signal to be input is also stored in the table, the switching unit 36 can select the signal by the transmission switch signal.

Therefore, the user using the terminal device 2 operates the input/output device such as the mouse 27, the keyboard 26, the remote controller 29 to make a selection from one or a plurality of selections of
1. displaying a screen serving as a thin client,
2. displaying a picture publicized on the Internet on the screen serving as thin client by an application operating on the OS 101,
3. displaying the resultant of coding the picture publicized on the Internet in the picture transmitting and receiving device, and
4. displaying a picture acquired from the content server on the display 25 of the terminal device 2, and to switch the same.

Furthermore, which signal of the image signal (motion picture) and the information display signal that can be transmitted from each image transmitting device 3, 3, ... to transmit according to the operation of the CPU 10 of the information processing apparatus 1 can be switched separate from the operation of the user. For instance, the CPU 10 of the information processing apparatus 1 can operate as the server management unit 102 to input the same transmission switch signal to the image transmitting devices 3, 3, ... assigned to a plurality of OS 101, 101, ... of each activating OS 101, 101, .... Thus, according to the operation of the CPU 10 of the information processing apparatus 1, the same picture can be displayed on the display 25, 25, ... of each terminal device 2, 2, ....

For instance, according to the operation of the CPU 10 of the information processing apparatus 1, the transmission switch signal is input to the plurality of image transmitting devices 3, 3, ... to also transmit the information display signal for displaying the content of disaster information, weather forecast, advertisement information and the like in addition to the display screen of each OS 101, 101, .... Therefore, in each terminal device 2, 2, ..., it can operate as the thin client and disaster information, weather forecast, and advertisement information can be displayed by screen separation.

Thus, the information processing apparatus 1 can manage in an integrated manner the motion picture to be transmitted to each terminal device 2, 2, ... using the image transmitting device 3, 3, ... by adopting a configuration in which the image transmitting device 3 also accepts input of picture from an external device such as the picture transmitting and receiving device 4, freely selects the signal with the transmission switch signal and transmits the same to each terminal device 2, 2, ....

Furthermore, since the image transmitting device 3, 3, ... is adapted to the standard of motion picture used in another service, simultaneous use with another service can be realized with a simple configuration. For instance, the IP broadcast can be viewed and the service can be provided through the Internet by thin client architecture more safely and at lower cost with one terminal device 2 by combining the standard of coding to the motion picture with H. 264 of IP broadcast implemented in Japan. Moreover, such service can be received using an existing television receiver, terminal device, and the like.

Therefore, various services can be provided by realizing a thin client service including the information processing apparatus 1 having the configuration shown in the second embodiment in the thin client architecture.

As a service that can be realized, both display of picture acquired from the public communication network N1 such as Internet on the application operating on the OS 101 and display of picture managed by the content database by switching of transmission can be realized with one terminal device 2 when the terminal device 2 operates as the thin client. The switching of transmission is performed by the operation of the user. If the user has a terminal device 2 including a decoding unit 23 responding to the motion picture to be transmitted and for displaying on the display 25, the user can receive all services with one terminal device. Search, map, on-line shopping, and chat are also possible when operating as the thin client.

Other services that can be realized include, when the CPU 10 of the information processing apparatus 1 operates as the server management unit 102 or a specific OS, freely combining the picture, data, content, and picture of IP broadcast received from the public communication network, data generated therein, and the like and displaying the same as a picture on the terminal device 2, 2, .... Since which motion picture and information display signal to transmit in the information processing apparatus 1 is managed in an integrated manner and switched, the content to be displayed can be customized in the information processing apparatus 1 for every user and for every group of user. Therefore, according to the operation of the CPU 10 of the information processing apparatus 1, a service for transmitting information to each terminal device 2, 2, ... by transmitting the motion picture of the IP broadcast to each terminal device 2, 2, ... and merging search, map, on-line shopping, and chat corresponded to the content of the IP broadcast to be transmitted can be provided.

Since the operation of the application on each OS 101, 101, ..., and motion picture etc. transmitted from the image transmitting device 3, 3, ... assigned to each OS 101, 101, ... can be recognized by the CPU 10 of the information processing apparatus 1, not only charging related to the provision of the thin client service, but collective charging etc. corresponding to the content usage state including the IP broadcast can also be managed. The management service such as viewer rating can be provided to the vendor by recognizing which content and motion picture are preferred and transmitted from the image transmitting device 3.

In addition, since the switch of the motion picture and the information display signal to be transmitted can be performed collectively by the operation of the CPU 10 of the information processing apparatus 1, disaster information or emergency contact information can be mandatorily displayed on each terminal device 2, 2, .... The OS 101 is operated based on the setting information corresponding to each terminal device 2, 2, ... and thus the necessary information (contact information etc.) can be selected and displayed for every user using each terminal device 2, 2, .... Furthermore, the manner (combination) of display and the content to be displayed may be set as setting information for every user, so that disaster information, emergency contact information and other preferred information can be displayed. The screen configuration etc. in such case can also be set.

Furthermore, the switching of the motion picture and the information display signal to be transmitted can be collectively performed by the operation of the CPU 10 of the information processing apparatus 1, and the same motion picture and information display signal can be transmitted to each terminal device 2, 2, .... Thus, a great number of users can view the same picture and information. For instance, data display such as advertisement can be combined and displayed on the display image when operating as the thin client. According to the operation of the CPU 10 of the information processing apparatus 1, the motion picture coded by the coding unit 33 and the motion picture coded by the picture transmitting and receiving device 4 are transmitted to the terminal device 2, 2, ... used by a great number of users in real time, so that the picture processed in real time can be viewed on each terminal device 2, 2, ....

According to the embodiments, the image signal representing a plurality of display screens is transmitted to the respective destinations from one information processing apparatus. The one information processing apparatus does not need to perform the process of acquiring the image signal generated based on the drawing instruction signal for every destination, temporarily storing the same and then transmitting to the outside, and such process can be realized by providing the drawing instruction signal similar to the configuration in which a plurality of monitors is connected.

According to the embodiments, transmission is performed based on the destination information accepted from the information processing apparatus by the respective image transmitting means.

According to the embodiments, the image signal is compression coded to the motion picture by the coding unit arranged in the image transmitting means itself and then transmitted without being coded and transmitted in the information processing apparatus.

According to the embodiments, the input signal from the input device is not directly transmitted and received between the external device and the information processing apparatus, and some of or all the input signals corresponding to the executing means are relayed by the image transmitting means. That is, the image signal representing the display screen and the input/output signal with the input/output device related to the operation can be collectively transmitted and received on one path.

According to the embodiments, every time the respective external device of the destination is activated/stopped, the executing means is dynamically activated and the image transmitting means is assigned. The image transmitting means can be assigned to another executing means while the one executing means is stopped.

According to the embodiments, not only the drawing instruction signal output from the executing means, but the motion picture and the information display signal obtained from the external device are accepted by the image transmitting means, and selection can be made to transmit one or a plurality of the signals by the input of the transmission switch signal.

In the embodiments, when transmitting an image signal representing the display screen to an external device, one or a plurality of image transmitting means respectively performs the transmission process, whereby its processing load is reduced, and the image signals of a plurality of display screens can be transmitted to the external device (terminal device). A great number of users are able to use the thin client by applying such an information processing apparatus to a thin client server.

In the embodiments, the communication means is arranged independent from the information processing apparatus in the transmitting means, so that the destination of the image signal such as address and port can be allocated, the load of the communication process of the information processing apparatus can be reduced, and a great number of users can use the thin client. The path between the external device and the information processing apparatus can be divided to the communication path for connection itself of authentication etc., and the data communication path of the image signal etc. representing the display screen, thereby ensuring safety.

In the embodiments, the image signal representing the display screen is compression coded to a digital motion picture thereby reducing the information amount and reducing the transmission load. In the coding process, the processing load can be reduced by hardware coding without being performed by the information processing apparatus itself. Thus, a great number of users can use the thin client. The standard of the motion picture can be combined with the standard of the IP broadcast and the general moving image content to facilitate application to other services.

In the embodiments, not only the transmission path of the image signal representing the display screen, but some or all of the input signals from the input/output device are also collectively transmitted and received by being relayed by the image transmitting means. Without receiving the input signal from the input/output device by the information processing apparatus and performing the process of determining which of a plurality of executing means and the transmitting means it corresponds, the correspondence relationship can be simplified and the processing load can be reduced, and furthermore, the safety can be ensured.

In the embodiments, the image transmitting means can be dynamically assigned to another executing means while the corresponding one executing means is stopped, and thus the image transmitting means does not need to be fixedly corresponded one on one to the plurality of executing means, that is, the plurality of virtual information processing apparatuses corresponding to the external device. A great number of users then can use the thin client with minimum hardware by design. The assigning timing is a timing corresponding to, not only activation/stop of the executing means, but also the operation state (invalidate assignment in time of suspended state of pause/standby) of the executing means, when the operation is not performed for a predetermined time, and instruction from the external device, so that the transmitting means can be efficiently assigned to a plurality of executing means.

In the embodiments, not only the image signal representing the display screen generated based on the drawing instruction signal output from the executing means, but transmission of signals such as motion picture obtained from another external device and information display signal for broadcast such as BML can be easily switched by the transmission switch signal. Therefore, the combination of the thin client service and the other picture and information distribution service can be performed in an integrated manner. The standard of coding of the transmitting means can be adapted to the standard used in other services, so that the process of IP packetizing etc. in transmitting to the external device can be commonly performed, and the picture and information distribution service such as IP broadcast and the thin client service can be provided in an integrated manner by simply switching the input path to the transmitting unit. The switch can be controlled to transmit picture, image, information of the same content simultaneously with the executing means corresponding to the plurality of external devices and the transmitting means assigned thereto, and thus various services can be provided.

## Claims

1. An information processing apparatus (1) comprising:
a processor (10) which performs one or more processes and outputs picture displaying instruction signals for displaying pictures in accordance with the respective performed processes; and
at least one image transmitting device (3) which includes: a receiving part (31) which receives the outputted picture displaying instruction signals;
an image signal generating part (30, 32) which generates image signals for displaying on the basis of the respective received picture displaying instruction signals; and
a transmitting part (34) which transmits the generated image signals to outside.

2. The apparatus according to claim 1, wherein
the at least one image transmitting device (3) accepts pieces of destination information indicative of destinations of the respective image signals, and
the transmitting part (34) transmits the image signals on the basis of the respective pieces of the received destination information.

3. The apparatus according to claim 1 or 2, wherein
the at least one image transmitting device (3) further includes a coding part (33) which codes the respective generated image signals to digital video signals, and
the transmitting part (34) transmits the video signals coded by the coding part (33).

4. The apparatus according to claim 1, 2 or 3, wherein
the at least one image transmitting device (3) relays all of or a part of input signals from the outside, the input signals instructing the respective processes.

5. The apparatus according to any preceding claim , further comprising an interface (31) which accepts an initiation requesting signal and a termination requesting signal, the signals corresponding to each process, wherein
each process will be assigned any of the at least one image transmitting device (3) by the following retrieving and assigning operations performed by the processor (10), and
the processor (10) is capable of performing the following operations of:
retrieving the at least one image transmitting device (3) that has not been assigned the processes yet and assigning the retrieved at least one image transmitting device (3) the process corresponding to the accepted initiation requesting signal, when the initiation requesting signal is accepted; and
terminating the process corresponding to the termination requesting signal and nullifying the at least one image transmitting device (3) that is assigned the terminated process, when the termination requesting signal is accepted.

6. The apparatus according to claim 3, wherein
the image transmitting device (3) accepts one of a video signal and an information displaying signal from the outside, the information displaying signal being for displaying predetermined information, and accepts a transmission switch signal, and
the image transmitting device (3) transmits at least one selected from the group consisting of the image signal generated by the image signal generating part (30, 32), the video signal, the video signal accepted from the outside, and the information displaying signal from the outside, when the transmission switch signal is accepted.

7. The apparatus according to claim 6, further comprising:
a coding part (33) which codes to a digital video signal of a predetermined standard; and
a video transmitting and receiving device (4) which receives/outputs at least one of the image signal that is not coded and the digital video signal that is coded, wherein
at least one of the image signal and the video signal outputted by the video transmitting and receiving device (4) is inputted into the image transmitting device (3).

8. The apparatus according to claim 7, wherein
at least one of one picture displaying instruction signal outputted by the processor (10), a signal outputted by the video transmitting and receiving device (4), and the information displaying signal from the outside is afforded to a plurality of the image transmitting devices (3), and
the transmission switch signal is inputted to the respective plurality of image transmitting devices (3) such that the plurality of image transmitting devices (3) transmit same image signal or same video signal.

9. The apparatus according to claim 5, wherein
the processor (10) nullifies the assignment of the image transmitting device (3) to one of the processes, when an operation state of the one process is a suspend/stand-by state in which a part of a hardware resource corresponding to the one process is terminated, and
the processor (10) assigns the image transmitting device (3) the rest of the processes other than the one process, when an operation state of the rest of the processes is an operative state in which a hardware resource corresponding to the rest of the processes is entirely operative.

10. The apparatus according to claim 5 or 9, wherein
the image transmitting device (3) relays all of or a part of input signals from the outside, the input signals instructing the respective processes,
the processor (10) determines whether the input signal corresponding to one of the processes has been terminated over a predetermined period, and
the processor (10) nullifies the assignment of the image transmitting device (3) to one of the processes, when it is determined that the input signal has been terminated over a predetermined period.

11. The apparatus according to claim 5, 9, or 10, wherein
the processor (10) assigns the retrieved image transmitting device (3) the process corresponding to a transmission initiating signal accepted by the interface (31), when the interface (31) accepts the transmission initiating signal for initiating display, and
the processor (10) nullifies the image transmitting device (3) which is assigned the process corresponding to a transmission terminating signal accepted by the interface (31), when the interface (31) accepts the transmission terminating signal for terminating display.

12. An information processing system comprising:
an information processing apparatus (1) including a processor (10) which performs processes and outputs picture displaying instruction signals for displaying pictures in accordance with the respective performed processes; and
at least one terminal apparatus (2) including a display which displays the picture, wherein
the information processing apparatus (1) further includes at least one image transmitting device (3) which has:
a receiving part (31) which receives the outputted picture displaying instruction signals;
an image signal generating part (30, 32) which generates image signals for displaying on the basis of the respective received picture displaying instruction signals; and
a first communicating part (34) which transmits the generated image signals to outside,
the information processing apparatus (1) transmits the image signals to each of the at least one image transmitting device (2) by affording the picture displaying instruction signals to an image signal generating part (30, 32) of the at least one image transmitting device (2),
the at least one terminal apparatus (2) further includes a second communicating part (21) which receives the image signals transmitted from the first communicating part (34), and
the at least one terminal apparatus (2) displays on the basis of the received image signals.

13. The system according to claim 12, wherein
the at least one image transmitting device (3) further has a coding part (33) which codes the respective generated image signals to digital video signals, and
the first communicating part (34) transmits the digital video signals coded by the coding part (33),
each of the at least one terminal apparatus (2) further includes a decoding part (23) which decodes the digital video signals having a predetermined standard, and
each of the at least one terminal apparatus (2) displays the picture on the basis of the digital video signal decoded by the decoding part (23), when the received image signal is the coded digital video signal.

14. The system according to claim 12 or 13, wherein
the at least one terminal apparatus (2) further includes:
an operation part (26, 27, 29) which accepts an operation; and
an interface (22) which transmits a part or all of input signals concerning the operation accepted by the operation part (26, 27, 29), and
the at least one image transmitting device (3) relays all of or a part of the input signals from the operation part (26, 27, 29).

15. The system according to claim 12, 13, or 14, wherein
the second communicating part (21) of each of the at least one terminal apparatus (2) transmits an initiation request signal and a termination request signal, the signals corresponding to each process, transmitting, to the information processing apparatus (1), the initiation request signal when accepting an initiation operation, transmitting, to the information processing apparatus (1), the termination request signal when accepting a termination operation,
the first communicating part (34) of the information processing apparatus (1) receives the transmitted the initiation request signal and the transmitted termination request signal, the signals corresponding to each process,
each process will be assigned any of the at least one image transmitting device (3) by the following retrieving and assigning operations performed by the processor (10), and
the processor (10) is capable of performing the following operations of:
retrieving the at least one image transmitting device (3) that has not been assigned the processes yet and assigning the retrieved at least one image transmitting device (3) the process corresponding to the accepted initiation requesting signal, when the initiation requesting signal is accepted; and
terminating the process corresponding to the termination requesting signal and nullifying the at least one image transmitting device (3) that is assigned the terminated process, when the termination requesting signal is accepted.

16. The system according to claim 12, wherein
the information processing apparatus (1) is the apparatus according to any one of claims 1 to 11.

17. The system according to claim 16, wherein
the terminal apparatus (2) further includes an operation part (26, 27, 29) which accepts an operation, and
the terminal apparatus (2) transmits a transmission switch signal to the corresponding image transmitting device in accordance with the accepted operation.

18. The system according to claim 15, wherein
the terminal apparatus further includes:
an operation part (26, 27, 29) which accepts an input operation; and
a processor (211) capable of performing the following processing operations of:
determining whether the input operation is performed within a predetermined time period;
transmitting, to the information processing apparatus (1), a transmission termination instruction of the image signal indicative of the picture, when the determination is made that the input operation is not performed over the predetermined time period; and
transmitting, to the information processing apparatus (1), a transmission initiation instruction of the image signal indicative of the picture, when the input operation is accepted after transmitting the transmission termination instruction, and
the processor (10) of the information processing apparatus (1) further performs the following processing operations of:
receiving the transmission termination instruction or the transmission initiation instruction;
nullifying the image transmitting device (3) assigned to the process corresponding to the received transmission termination instruction, when the transmission termination instruction is received; and
assigning the retrieved image transmitting device (3) to the process corresponding to the received transmission initiation instruction.

19. A controlling method for controlling an information processing apparatus (1) including a processor (10) which performs processes and outputs picture displaying instruction signals for displaying pictures in accordance with the respective performed processes, the method comprising:
providing at least one image transmitting device (3);
assigning at least one of the at least one image transmitting device (3) to each process;
generating, by the at least one image transmitting device (3), image signals for displaying the pictures on the basis of the outputted picture displaying instruction signals;
receiving pieces of destination information indicative of destinations of the respective image signals; and
transmitting the image signals to the corresponding destinations on the basis of the received pieces of the destination information.

20. A computer-executable computer program for causing a computer to perform processes and for causing the computer to output picture displaying instruction signals for displaying pictures in accordance with the respective performed processes, the computer including at least one image transmitting device (3) which generates image signals for displaying the pictures on the basis of the respective picture displaying instruction signals, the program comprising:
causing the computer to assign at least one of the at least one image transmitting device (3) to each process;
causing the computer to receiving pieces of destination information indicative of destinations of the respective image signals; and
causing the computer to transmitting the image signals to the corresponding destinations on the basis of the received pieces of the destination information.

21. A information processing system comprising:
a information processing apparatus (1) including at least one kind of performing means (10) for performing processes and for outputting picture displaying instruction signals for displaying pictures in accordance with the respective performed processes; and
at least one terminal apparatus (2) including display means for displaying the screen, wherein
the information processing apparatus (1) further includes at least one kind of image transmitting means (3) having:
an image generating part (30, 32) which generates image signals representative of the pictures on the basis of the picture displaying instruction signals, when the picture displaying instruction signals are afforded; and
a transmitting part which transmits the generated image signals,
the image transmitting means (3) transmits, by affording the picture displaying instruction signals to the image generating part of the image transmitting means, the image signals to the respective at least one terminal apparatus (2),
the terminal apparatus (2) further includes means for receiving the image signal transmitted from the transmitting part of the information processing apparatus (1), and
the terminal apparatus (2) displays the picture on the basis of the received image signal.
